# EUROPEAN PATENT APPLICATION

(11) **EP 1 826 590 A2**
(43) Date of publication of application: **29.08.2007**
(21) Application number: 07102997.9
(22) Date of filing: 23.02.2007
(51) Int. Cl.: G02B 1/11, B32B 1/00, C09J 7/00

(54) **Optical function film, display device and manufacturing method for the optical function film**

(30) Priority: 28.02.2006 JP 2006052738; 15.02.2007 JP 2007035050
(71) Applicant: Pioneer Corporation, Meguro-ku, Tokyo (JP)
(72) Inventor: Mitsuhashi, Renichi c/o Pioneer Corporation, Ota-ku Tokyo 143-8564 (JP); Yokozawa, Michio c/o Pioneer Corporation, Ota-ku Tokyo 143-8564 (JP)
(74) Representative: Haley, Stephen

(57) **Abstract**

A first reflection-property adjusting film (430) is detachably provided on a surface of an optical-property adjusting film (420) of an optical function film (400). The optical function film (400) is attached such that the first antireflection film 430 does not face a display surface (321). Accordingly, for example, when repairing damage on a surface of the optical function film (400) that is a surface of the first antireflection film 430, such repair can be performed only by detaching the first antireflection film (430) attached in a detachable manner. Since the optical function film (400) is provided with the first antireflection film (430) and the second antireflection film in advance, it is possible to reliably prevent deterioration in display performance, displacement in position in attaching a later-added reflection film, deterioration in transmittance or change in color tones which may be caused by an air bubble or dust contained in attaching the later-added reflection film.

## Description

The present invention relates to an optical function film provided on a display surface, a display device and a manufacturing method for the optical function film.

There have been known display devices with a display surface on which an optical function film is provided (see, for example, Patent Document: JP-A-2004-246370 (pages 4 and 5)).

The patent document discloses a film-like front filter which is attached on a front side of the display surface. The film-like front filter includes a transparent conductive film and an antireflection film attached on a front side of the transparent conductive film via an adhesive layer. The film-like front filter is attached on the front side of the display surface by an adhesive layer provided on a rear side of the transparent conductive film.

A film portion of the film-like front filter is formed to be larger than a display region of the display surface (for example, a luminous region of a PDP). On the other hand, the adhesive layer is formed in a size corresponding to the display region, so that the remaining peripheral portion of the film-like front filter is a repair region. In the repair region, a space is formed between the film portion and the display surface. The whole film-like front filter can be detached by inserting a tool into the space and performing a detachment operation.

Antireflection films are also known which are attachable on a display surface of, for example, a portable phone by a user (hereinafter referred to as a later-added antireflection film). The later-added antireflection film is added as necessary for a required function of the display surface. Specifically, the user purchases the later-added antireflection film and attaches the film on the display surface manually, for example.

However, in the above-described arrangement disclosed in the patent document, when the antireflection film is damaged and to be repaired, all the arrangement of the film-like front filter needs to be detached from the PDP. Such repair requires a unit for detaching the antireflection film from the PDP and re-attaching the antireflection film to the PDP, which may make it difficult for the user to repair.

The later-added antireflection film is appropriately attached on the display surface when an additional function is required. The user often attaches the later-added reflection film manually, which may cause problems such as deterioration in display performance caused by an air bubble or dust, displacement in position in the attachment, deterioration in transmittance or change in color tones.

An object of the present invention is to provide an optical function film, a display device and a manufacturing method of the optical function film which can be repaired easily and appropriately.

An optical function film according to an aspect of the invention is provided on a main body of a display device which has a display surface. The optical function film includes: an optical-property adjusting film which is provided on a display surface side of the display device, the optical-property adjusting film at least having an antireflection function for preventing reflection of incident light; and a reflection-property adjusting film detachably attached on a surface of the optical-property adjusting film, the reflection-property adjusting film having an antireflection function.

An optical function film according to an aspect of the invention is provided on a main body of a display device which has a display surface. The optical function film includes : a first reflection-property adjusting film provided on a display surface side of the display device, the first reflection-property adjusting film having an antireflection function for preventing reflection of incident light; and a second reflection-property adjusting film detachably attached on a surface of the first reflection-property adjusting film, the second reflection-property adjusting film having an antireflection function

A display device according to an aspect of the invention includes: a main body which has a display surface; and the aforesaid optical function film provided on a display surface side of the main body.

A display device according to an aspect of the invention includes: a main body which has a display surface; and the aforesaid optical function film provided on a display surface side of the main body. The main body herein is a plasma display panel.

A manufacturing method of an optical function film according to an aspect of the invention may be for the aforesaid optical function film. The manufacturing method includes: placing at least one of the optical-property adjusting film and the reflection-property adjusting film on a working surface; and attaching the optical-property adjusting film and the reflection-property adjusting film in a detachable manner.

A manufacturing method of an optical function film according to an aspect of the invention may be for the aforesaid optical function film. The manufacturing method includes: placing at least one of the first reflection-property adjusting film and the second reflection-property adjusting film on a working surface; and attaching the first reflection-property adjusting film and the second reflection-property adjusting film in a detachable manner.
Fig. 1 is a partially cut-out cross section briefly showing a primary portion of a display device of an embodiment according to the present invention ;
Fig. 2 is a schematic illustration briefly showing an optical function film of the aforesaid embodiment;
Fig. 3 is a flowchart showing a manufacturing method of the optical function film of the aforesaid embodiment;
Fig. 4 is a graph showing results of an experiment performed as an embodiment of the invention;
Fig. 5 is a schematic illustration briefly showing an optical function film of another embodiment of the invention;
Fig. 6 is a schematic illustration briefly showing an optical function film of a further another embodiment of the invention;
Fig. 7 is a schematic illustration briefly showing an optical function film of a further another embodiment of the invention;
Fig. 8 is a schematic illustration briefly showing an optical function film of a further another embodiment of the invention;
Fig. 9 is a schematic illustration briefly showing a display device of a further another embodiment of the invention.
Fig. 10 is a schematic illustration briefly showing a display device of a further another embodiment of the invention.
Fig. 11 is a schematic illustration briefly showing an optical function film of a further another embodiment of the invention;
Fig. 12 is a schematic illustration briefly showing an optical function film of a further another embodiment of the invention; and
Fig. 13 is a schematic illustration briefly showing an optical function film of a further another embodiment of the invention.

A display device of an embodiment of the present invention will be described below with reference to the attached drawings. In this embodiment, a plasma display panel (PDP) is taken as an example of a display device main body. However, the display device main body may be an arrangement for screen-displaying such as a liquid crystal display panel, an organic EL (Electro Luminescence) panel, an FED (Field Emission Display), an electrophoretic display panel or the like. The display device main body may have a flat display surface for displaying or the display surface may be curved for example.

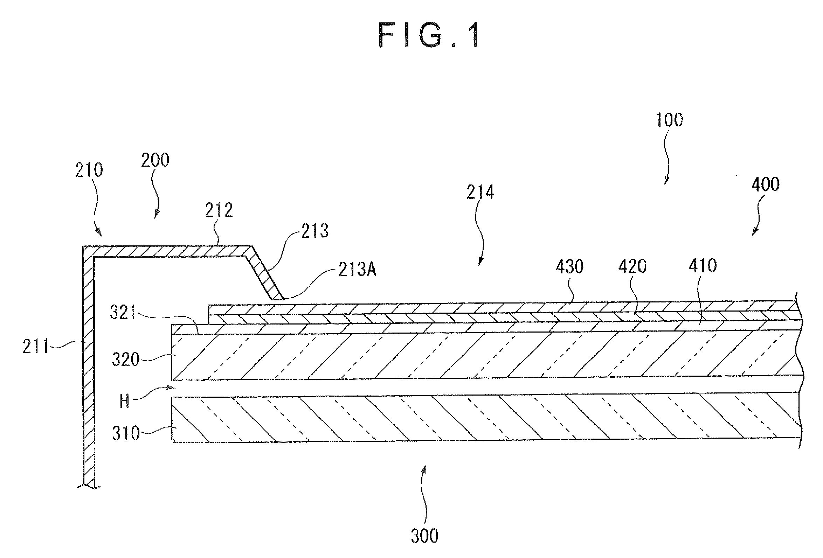

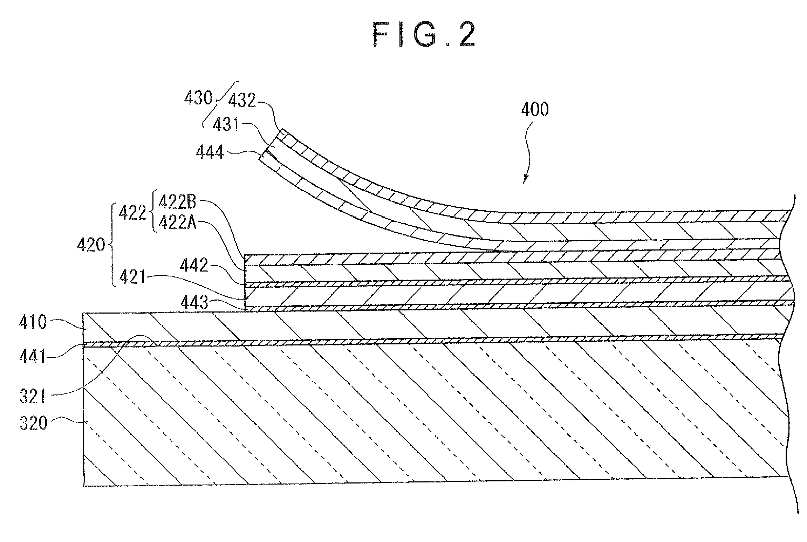

Fig. 1 is a partially cut-out cross section schematically showing a primary portion of the display device. Fig. 2 is a schematic illustration briefly showing an optical function film.

In Figs. 1 and 2 and Figs. 5 to 12 (described later), components are illustrated in an exaggerated manner with larger thicknesses in order to facilitate understanding of the arrangements.

### [Arrangements of Display device]

In Fig. 1, the reference numeral 100 denotes a display device. The display device 100 displays an image data input through an input terminal (not shown).

The display device 100 includes a casing 200, a PDP 300 as a display device main body, an optical function film 400, a controller (not shown) and the like.

The casing 200 fixes the assembled PDP 300 and controller. The casing 200 includes a casing main body (not shown), a decorative frame 210 as a frame member and the like.

The casing main boy has a substantially rectangular box-like shape with one open surface. An inner case (not shown) can be attached in an inner space of the casing main body. To the inner case, the PDP 300 and the controller for controlling the PDP 300 for a display can be attached. The controller includes a drive circuit for controlling cells of the PDP 300 to discharge electricity, a power source (not shown) for supplying electricity and the like. The drive circuit is connected to a drawing electrode (not shown) provided on an end of the PDP 300 with a so-called flexible cable.

The decorative frame 210 is made of synthetic resin in a rectangular frame shape, for example. The decorative frame 210 includes a decorative case portion 211 in a rectangular tubular shape substantially covering an outer circumference of the casing main body. On one end of the decorative case portion 211, a covering portion 212 is continuously formed so as to extend with a substantially right angle toward a central side of the decorative case portion 211 and serves as a frame portion in a frame shape substantially covering a periphery of the one open surface of the casing main body. On an inner end of the covering portion 212, a projecting portion 213 is continuously formed so as to project with an obtuse angle toward a central side of the decorative case portion 211 and toward a plane facing the open surface of the casing main body. A tip end 213 A (a projecting tip portion) of the projecting portion 213 defines a view region 214 of the PDP 300, in which pictures are displayed for a user.

For example, the decorative case portion 211 of the decorative frame 210 may be provided with a screw through hole (not shown) through which a screw (not shown) is inserted. By screwing a screw in the screw through hole into a screw hole (not shown) provided in the casing main body, the decorative frame 210 can be detachably attached to the casing main body such that the outer circumference and a front side of the casing main body are cover by the decorative frame 210.

Alternatively, the decorative frame 210 and the casing main body may be attached to each other using an engagement hole (not shown) provided in one of the decorative frame 210 and the casing main body and an engagement claw (not shown) provided on the other one, the engagement claw releasably engaged in the engagement hole.

The PDP 300 includes a rear surface substrate 310 and a front surface substrate 320 which face with each other with a discharge space H therebetween.

The rear surface substrate 310 and the front surface substrate 320 are sealed using seal frit (not shown) on outer peripheral portions. The sealed discharge space H is decompressed and filled with inert gases such as He-Xe (helium - xenon) system or Ne-Xe (neon - xenon) system.

On a surface of the rear surface substrate 310 on the discharge space H side, a plurality of linear address electrodes, a phosphor layer or the like are provided.

On a surface of the front surface substrate 320 on the discharge space H side, plural pairs of display electrodes aligned with a common interval so as to be substantially orthogonal to the address electrodes, a dielectric layer covering the display electrodes or the like are provided. On a surface of the front surface substrate 320 on the opposite side of the discharge space H, a display surface 321 is provided on which an image is displayed.

The PDP 300 is disposed in the casing main body such that a portion near an outer periphery of the display surface 321 of the front surface substrate 320 substantially faces the decorative frame 210. In other words, the PDP 300 is disposed such that the portion near the outer periphery is not exposed to the outside.

The optical function film 400 is provided on the display surface 321 of the PDP 300 and has functions for color correction, reflection prevention and electromagnetic wave shielding. The optical function film 400 is adjusted to have a transmittance of 30 to 50%.

The optical function film 400 includes an electromagnetic-wave shielding film 410 attached on the display surface 321, an optical-property adjusting film 420 attached on the electromagnetic-wave shielding film 410 and a first antireflection film 430 (a reflection-property adjusting film) detachably attached on the optical-property adjusting film 420.

The electromagnetic-wave shielding film 410 includes a transparent film (not shown) made of PET (polyethylene terephthalate) and a conductive portion (not shown) formed on the transparent film as a thin layer or a mesh form of conductive material.

As shown in Figs. 1 and 2, the electromagnetic-wave shielding film 410 is attached on the display surface 321 via an adhesive layer 441 so as to cover the whole display surface 321. The adhesive layer 441 is provided by coating an acrylic or silicon adhesive material, the adhesive layer 441 having an adhesion of 3N/25 to 30N/25 mm in perpendicular detachment, for example. Accordingly, the electromagnetic-wave shielding film 410 is provided so as not to be easily detached by a user but so as to be detached from the front surface substrate 320 of the PDP 300 without any damage in factory repair. Specifically, the adhesion to attach the electromagnetic-wave shielding film 410 so as to be orthogonally detachable without any damage in factory repair is 3N/25 to 30N/25 mm, preferably 3N/25 to 13N/25 mm with consideration for detachment efficiency in factory repair.

Note that the adhesion of 3N/25 mm in perpendicular detachment means that a force of 3N is required for detaching the electromagnetic-wave shielding film 410 with a width of 25 mm in an orthogonal direction relative to the display surface 321 when the electromagnetic-wave shielding film 410 is attached on the display surface 321 via the adhesive layer 441.

Hereinafter in this specification, adhesion will be shown in the same manner when the adhesion is quantitatively expressed.

An adhesion generally detachable by a user is equal to or less than 1.0N/25 mm according to an experiment by an inventor of the present invention. However, in many cases, it is not general users but maintenance persons who conduct the detachment of the first antireflection film 430. Persons who have received training for the detachment of the first antireflection film 430 like the maintenance persons have a technique for the detachment, so that the detachment can be performed when the adhesion is equal to 13N/25 mm or less.

Further, the first antireflection film 430 needs to be detached such that another film like the electromagnetic-wave shielding film 410 is not detached. The experiment showed that the force required for detaching the first antireflection film 430 is equal to or less than 70% of the force for detaching the other films, preferably equal to or less than 50% thereof.

As shown in Fig. 2, the optical-property adjusting film 420 includes a transmittance adjusting film 421 and a second antireflection film 422 provided on a surface of the transmittance adjusting film 421.

The transmittance adjusting film 421 has a transmittance adjusting function for infrared radiation shielding and color correction. The transmittance adjusting film 421 is formed with a transmissive film containing pigment for infrared radiation shielding or color correction, or the transmissive film being coated with the pigment.

The second antireflection film 422 has an antireflection function for incident light shielding. The second antireflection film 422 includes a transparent film 422A (a transmissive film made of PET, for example) and an antireflection film 422B which is a thin film provided on a surface of the transparent film 422A, the antireflection film 422B preventing reflection of light by interfering with the incident light. The second antireflection film 422 is formed with the transparent film 422A which is AR (Anti Reflective)-coated. Note that this AR coating is also called an LR (Low Reflective)-coating.

The transparent film 422A has a thickness of approximately 100 µm. The antireflection film 422B is provided in a form of a coating of resin material and is adjusted to have a transmittance of 93 to 95%.

The second antireflection film 422 is attached on the transmittance adjusting film 421 via an adhesive layer 442 having a substantially equal adhesion to the adhesive layer 441 for example such that the transparent film 422A faces the transmittance adjusting film 421.

The optical-property adjusting film 420 is attached on the electromagnetic-wave shielding film 410 via an adhesive layer 443 having a substantially equal adhesion to the adhesive layer 441 for example such that the transmittance adjusting film 421 faces the electromagnetic-wave shielding film 410. As shown in Fig. 1, the optical-property adjusting film 420 is attached such that an outer periphery of the optical-property adjusting film 420 is positioned on the inner side of the outer periphery of the display surface 321 and on the outer side of the tip end 213A of the decorative frame 210.

The first antireflection film 430 has an antireflection function by the AR coating. As shown in Fig. 2, the first antireflection film 430 includes a transparent film 431 (a transmissive film) and an antireflection film 432. The transparent film 431 and the antireflection film 432 have similar arrangements to the transparent film 422A and the antireflection film 422B of the second antireflection film. The transparent film 431 has a thickness of approximately 100 µm. The antireflection film 432 has a transmittance of 93 to 95%.

The first antireflection film 430 is attached on the optical-property adjusting film 420 via a low adhesive layer 444 having a lower adhesion than the adhesive layer 443 such that the transparent film 431 faces the optical-property adjusting film 420. The low adhesive layer 444 is provided by coating an acrylic adhesive material for example, the low adhesive layer 444 having an adhesion of 0.5N/25 mm to 1,0N/25 mm. The adhesion in perpendicular detachment of the low adhesive layer 444 is set to be equal to or less than 50% of the adhesion in perpendicular detachment of the adhesive layers 441, 442 and 443. Accordingly, the first antireflection film 430 is provided so as to be easily detached by a user without causing the detachment of the electromagnetic-wave shielding film 410, the transmittance adjusting film 421 or the adhesive layer 442. Hereinafter, an adhesive material used for the low adhesive layer 444 is called a low adhesive material.

As shown in Fig. 1, the first antireflection film 430 is attached such that an outer periphery of the first antireflection film 430 is superposed on the outer periphery of the optical-property adjusting film 420. Namely, the first antireflection film 430 is attached such that the outer periphery of the first antireflection film 430 is positioned on the outer side of the tip end 213A of the decorative frame 210.

### [Manufacturing Method of Optical Function Film]

A manufacturing method of the optical function film 400 will be described with reference to the attached drawings. In the description below, a sheet-type method will be taken as an example, but a continuous method and the like may be alternatively employed.

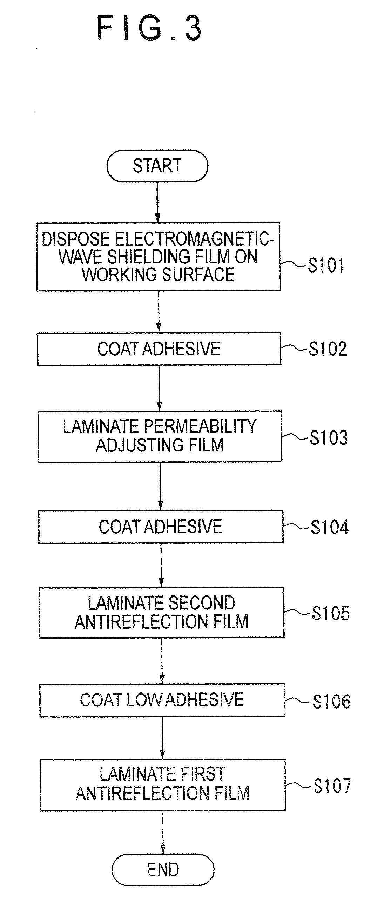

Fig. 3 is a flowchart showing the manufacturing method of the optical function film 400.

The electromagnetic-wave shielding film 410 is placed on a working surface of a manufacturing device (not shown) (Step S101). Note that the manufacturing device may be in a clean room.

The adhesive material is provided on a surface of the electromagnetic-wave shielding film 410 for attaching the adhesive layer 443 on the surface (Step S102). On the adhesive material, the transmittance adjusting film 421 is laminated using a pressure bonding roller (not shown) (Step S103). The adhesive material is provided for attaching the adhesive layer 442 (Step S104). On the adhesive material, the second antireflection film 422 is laminated using a pressure bonding roller (Step S105). On the electromagnetic-wave shielding film 410, the optical-property adjusting film 420 is provided.

Now, the optical-property adjusting film 420 is on the working surface. Step S101 to S105 form a placement process of this embodiment of the invention.

The low adhesive material is provided on a surface of the second antireflection film 422 for attaching the low adhesive layer 444 (Step S106). On the low adhesive material, the first antireflection film 430 is laminated using a pressure roller (Step S107). Thus, the optical function film is manufactured.

Now the first antireflection film 430 is attached on the optical-property adjusting film 420 in a detachable manner. Step S106 to S 107 form an attachment process of this embodiment of the invention.

### [Effects of Display device]

As one effect of the display device 100, a repair thereof will be described, which is performed when a surface of the optical function film 400 is damaged.

When a user recognizes damage on the surface of the optical function film 400 (on the first antireflection film 430), the user firstly needs to remove the decorative frame 210 from the casing main body. Since the decorative frame 210 is attached by a screw, it is easy to remove the decorative frame 210.

To detach the first antireflection film 430 from the optical-property adjusting film 420, the user detaches the first antireflection film 430 from an outer periphery of the first antireflection film 430 for example.

Since the first antireflection film 430 is attached via the low adhesive layer 444 having a lower adhesion than the adhesive layer 443, the user can easily detach only the first antireflection film 430. By detaching the first antireflection film 430, the undamaged second antireflection film 422 of the optical-property adjusting film 420 comes to the surface of the optical function film 400.

The transmittance of the optical function film 400 contributes to luminance and contrast of the display device 100. However, since the first antireflection film 430 is provided for antireflection, even when the first antireflection film 430 is detached, the transmittance of the optical function film 400 will not change much. For example, when the antireflection film 432 and the optical function film 400 respectively have the transmittance of 94 and 32%, the optical function film 400 will have the transmittance of approximately 34% after detachment.

Thus, change in transmittance of the optical function film 400 can be restrained, so that change in luminance or contrast of the optical function film 400 can be also restrained. Accordingly, the visibility of pictures after detachment will not change much.

The user attaches the decorative frame 210 to the casing main body, ending the repair.

### [Effects and Advantages of Display device]

As described above, in this embodiment, the first antireflection film 430 is detachably attached on one surface of the optical-property adjusting film 420 of the optical function film 400.

Accordingly, when repairing damage on the surface of the optical function film 400 (that is the surface of the first antireflection film 430), such repair can be performed only by detaching the first antireflection film 430 attached in a detachable manner. Since the first antireflection film 430 is provided for antireflection, even after the first antireflection film 430 is detached, the visibility of pictures will not change much.

In addition, since the optical function film 400 is provided with the first antireflection film 430 and the second antireflection film 422 in advance, it is possible to reliably prevent deterioration in display performance, displacement in position in attaching a later-added reflection film, deterioration in transmittance or change in color tones which may be caused by an air bubble or dust contained in attaching the later-added reflection film.

Hence, the repair can be performed easily and appropriately.

The first antireflection film 430 is detachably provided via the low adhesive layer 444 made of a low adhesive material.

Hence, the adhesive material herein may be a general material used for attaching a film, so that existing equipment can be used for providing the first reflection film 430 by selecting a low adhesive material adjusted to have an appropriate adhesion. Accordingly, the optical function film 400 can be manufactured without an increase in manufacturing processes and costs.

The optical function film 400 is provided with the electromagnetic-wave shielding film 410.

Hence, the optical function film 400 can be used for the display device 100 having the PDP 300 that requires appropriate electromagnetic wave shielding, thereby expanding the use of the display device 100.

The adhesion of the low adhesive layer 444 is set to be equal to or less than 70% of the adhesion the adhesive layers 441, 442 and 443.

Accordingly, the first reflection film 430 can be easily detached with a risk of detachment of another film maximally suppressed. Particularly, in the embodiment, since the adhesion of the low adhesive layer is set to equal to or less than 50% of the adhesion of the adhesive layer 441 and the like, the first antireflection film 430 can be easily detached.

Further, the optical function film 400 is used in the display device 100 having the PDP 300.

Hence, the display device 100 can be easily repaired, thereby contributing to expansion in sales thereof.

The first antireflection film 430 is provided such that the outer periphery of the first antireflection film 430 is positioned on the outer side of the display surface 321 than the tip end 213A af the decorative frame 210.

Hence, the outer periphery of the first antireflection film 430 will not be exposed in the view region 214, thereby preventing a user or the like from touching on the outer periphery, so that an unintentional detachment of the first antireflection film 430 can be prevented. In addition, owing to such arrangement, when providing the first antireflection film 430 on the optical-property adjusting film 420, it is not necessary to intentionally displace the outer peripheries of the first antireflection film 430 and the optical-property adjusting film 420 from each other, thereby facilitating the manufacturing.

The first antireflection film 430 and the second antireflection film 422 have a common structure.

Accordingly, the first antireflection film 430 and the second antireflection film 422 can be manufactured in a common manufacturing process, thereby enhancing manufacturing efficiency of the optical function film 400.

### [Embodiments]

The experiment performed as an embodiment, which is for confirming effects of the invention will be described below.

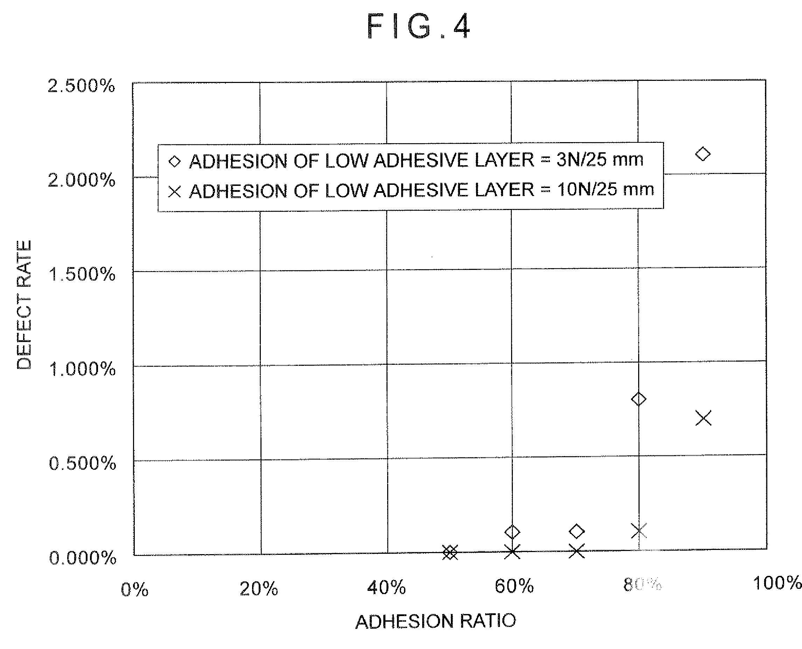

Fig. 4 is a graph showing results of the experiment.

### (Arrangements of Experimental Samples)

An arrangement of an experimental sample will be described.

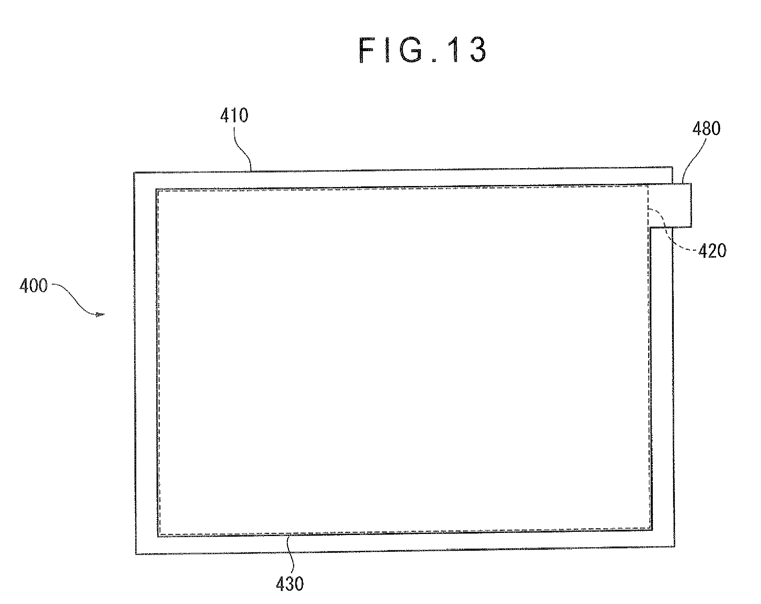

As the experimental sample, an arrangement similar to the arrangement shown in Fig. 2 was used. Specifically, as the first antireflection film 430, a film having a longer length by about 3 mm in the left hand direction in Fig. 2 than the optical-property adjusting film 420, the elongated portion is used as a detachment portion like an arrangement shown in Fig. 13 which is described later.

The adhesive layers 441, 442 and 443 are formed by coating an acrylic adhesive material. As the adhesive material of the low adhesion layer 444, a material having an adhesion of 3N/25 mm in perpendicular detachment or 10N/25 mm. As the adhesive material of the adhesion layers 441, 442 and 443, materials which have an adhesion ratio of 50%, 60%, 70%, 80% and 90% when dividing the adhesion of the low adhesion layer 444 in perpendicular detachment by the adhesions of the adhesion layers 441, 442 and 443 in perpendicular detachment.

### (Experimental Method)

An experimental method will be described below.

Experimental samples are prepared by combining the adhesion layers 441, 442, 443 which have the above-described adhesions and the low adhesion layer 444 by 1000 pieces for each combination. One experimental sample is placed on an experimental table with the first antireflection film 430 on the top and detached by pulling the detachment portion orthogonally.

### (Evaluations)

Evaluations will be described below.

When a portion or all of at least one or all of the electromagnetic-wave shielding film 410, the transmittance adjusting film 421 and the second antireflection film 422 are detached, this result was evaluated as a detachment defect. A defect ratio is calculated by dividing the number of the samples of each combination in which the detachment defect occurred by the total sample number 1000. Table 1 below shows the results. The results shown in Table 1 are also shown in a graph in Fig. 4.

**[Table 1]**

| | | | | | |
|---|---|---|---|---|---|
| ADHESION RATIO (ADHESION OF LOW ADHESIVE LAYER/ADHESION OF ADHESIVE LAYER) | 50% | 60% | 70% | 80% | 90% |
| DEFECT RATE WHEN ADHESION OF LOW ADHESIVE LAYER IS 3N/25 mm | 0.00% | 0.10% | 0.10% | 0.80% | 2.10% |
| DEFECT RATE WHEN ADHESION OF LOW ADHESIVE LAYER IS 10N/25 mm | 0.00% | 0.00% | 0.00% | 0.10% | 0.70% |

As shown in Table 1 and Fig. 4, when the adhesion of the low adhesive layer 444 has a comparatively large force of 10N/25 mm, there is no possibility of occurrence of detachment defects in case of the adhesion ratio of 70% or below and there is a possibility of occurrence of detachment defects in case of the adhesion ratio of more than 70%.

When the adhesion of the low adhesive layer 444 has a comparatively small force of 30N/25 mm, there is no possibility of occurrence of detachment defects in case of the adhesion ratio of 50% or below and there is a possibility of occurrence of detachment defects in case of the adhesion ratio of more than 50%. Particularly, when the adhesion of the low adhesive layer 444 is 3N/25 mm, the possibility of occurrence of detachment defects becomes large in case of the adhesion ratio of more than 70%.

Thus, by setting the adhesion ratio to be equal to or less than 70%, the possibility of occurrence of detachment defects can be suppressed to be minimum and by setting the adhesion ration to be equal to or less than 50%, the possibility of occurrence of detachment defects can be eliminated.

### [Modifications of Embodiment]

The scope of the invention is not limited to the above-described embodiment, but may include various modifications as long as an object of the invention can be achieved.

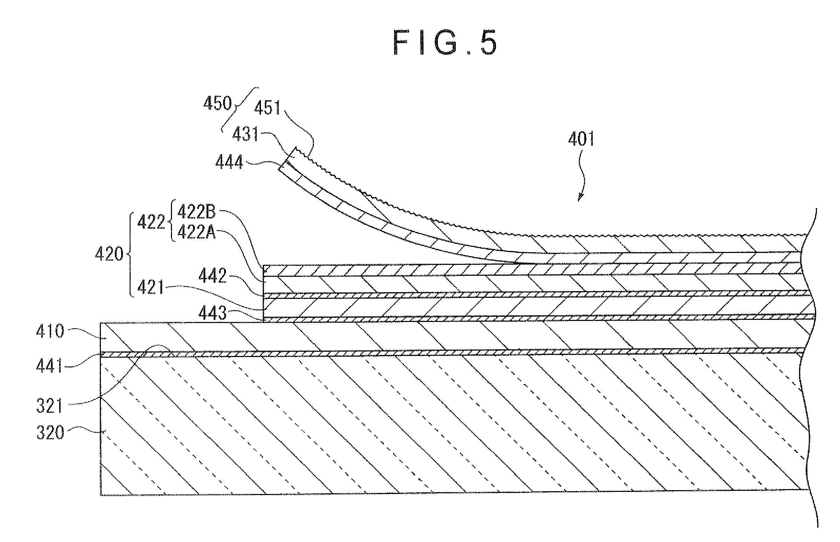

Such modifications include an arrangement shown in Fig. 5.

An optical function film 401 shown in Fig. 5 includes the electromagnetic-wave shielding film 410, the optical-property adjusting film 420 attached on the electromagnetic-wave shielding film 410 via the adhesive layer 443 and a first antireflection film 450 (a second optical-property adjusting film) detachably attached on the optical-property adjusting film 420 via the low adhesive layer 444. In Fig. 5, the optical-property adjusting film 420 functions as the first reflection-property adjusting film of the invention.

The first antireflection film 450 includes the transparent film 431 and micro-asperities 451 defined in a surface of the transparent film 431, the micro-asperities preventing reflection of light by diffusely reflecting incident light. The first antireflection film 450 includes the AR (Anti Flare)-coated second antireflection film 422, while the transparent film 431 is AG (Anti Glare)-processed.

Owing to such an arrangement, the surface condition of the optical function film 401 can be changed before and after the detachment of the first antireflection film 450 without deteriorating the antireflection function. Accordingly, it is possible to provide a user with the display device 100 fit for demands of the user by an easy method of appropriately detaching the first antireflection film 450 in accordance with the demands of the user before attaching the decorative frame 210.

Even when the first antireflection film 450 is an AR-coating type and the second antireflection film 422 is an AG-processed type, similar effects and advantages can be obtained.

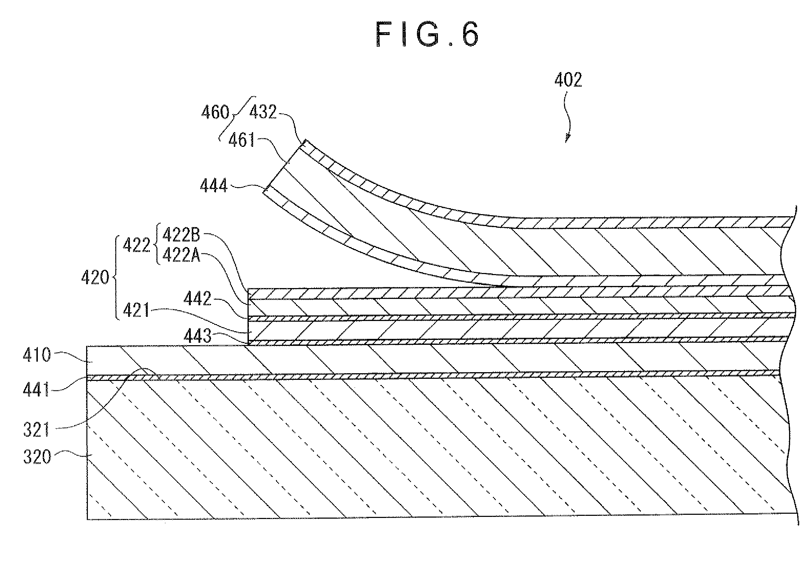

The modifications include an arrangement shown in Fig. 6.

An optical function film 402 shown in Fig. 6 includes the electromagnetic-wave shielding film 410, the optical-property adjusting film 420 attached on the electromagnetic-wave shielding film 410 via the adhesive layer 443 and a first antireflection film 460 (an optical-property adjusting film) detachably attached on the optical-property adjusting film 420 via the low adhesive layer 444.

The first antireflection film 460 has the antireflection film 432 and a transparent film 461 (a transmissive film) of a thickness of approximately 180 µm which is in a range of a condition of 100 to 200 µm. The first antireflection film 460 includes the transparent film 461 which has a larger thickness than the transparent film 431 of the first antireflection film 430.

Owing to such an arrangement, as compared with the first antireflection film 430 of the optical function film 400, damage on the first antireflection film 460 can be absorbed. Hence, as compared with the optical function film 400, an optical function film 402 which can restrain damage on the optical-property adjusting film 420 can be provided.

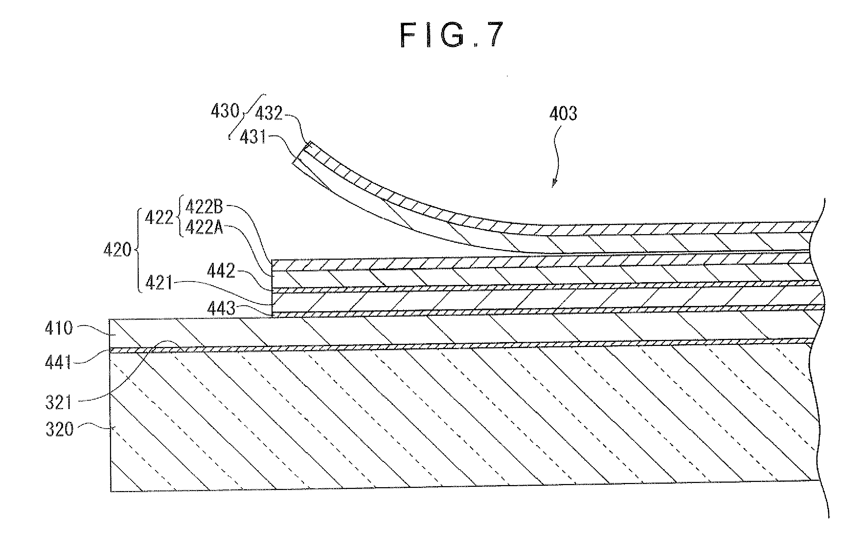

The modifications include an arrangement shown in Fig. 7.

An optical function film 403 shown in Fig. 7 includes the electromagnetic-wave shielding film 410, the optical-property adjusting film 420 attached on the electromagnetic-wave shielding film 410 via the adhesive layer 443 and the first antireflection film 430 detachably attached on the optical-property adjusting film 420 via static electricity.

Owing to such an arrangement, since no low adhesive material is used, no low adhesive material will remain on the optical-property adjusting film 420 after detachment of the first antireflection film 430. Hence, the repair can be performed more easily and appropriately.

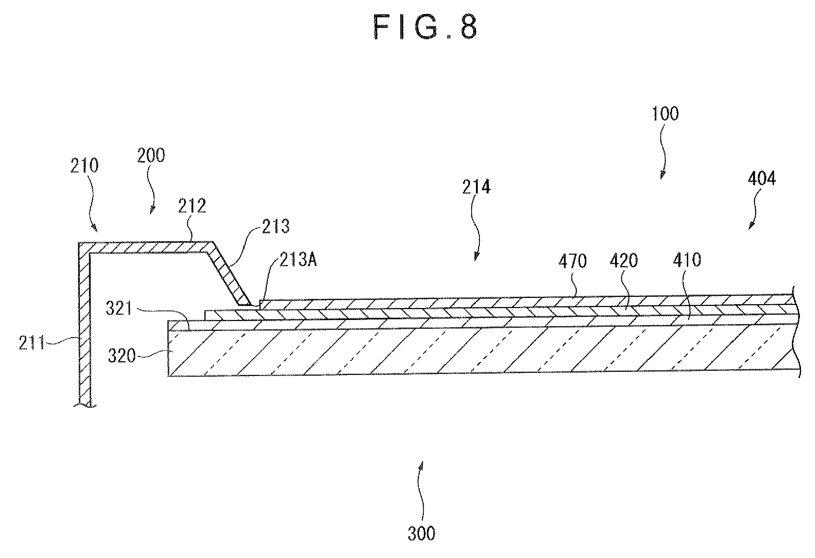

The modifications include an arrangement shown in Fig. 8.

An optical function film 404 shown in Fig. 8 includes the electromagnetic-wave shielding film 410, the optical-property adjusting film 420 attached on the electromagnetic-wave shielding film 410 via an adhesive layer (not shown) and a first antireflection film 470 (an optical-property adjusting film) detachably attached on the optical-property adjusting film 420 via a low adhesive layer (not shown).

The first antireflection film 470 has a common structure to the first antireflection film 430 of the above-described embodiment. The first antireflection film 470 has a smaller contour than the first antireflection film 430. The first antireflection film 470 is provided such that the outer periphery of the first antireflection film 470 is positioned on the inner side of the display surface 321 than the outer periphery of the optical-property adjusting film 420 and the tip end 213A of the decorative frame 210.

Owing to such an arrangement, since the outer periphery of the first antireflection film 470 is exposed from the view region 214, the first antireflection film 470 can be detached without removing the decorative frame 210. Hence, the repair can be performed more easily.

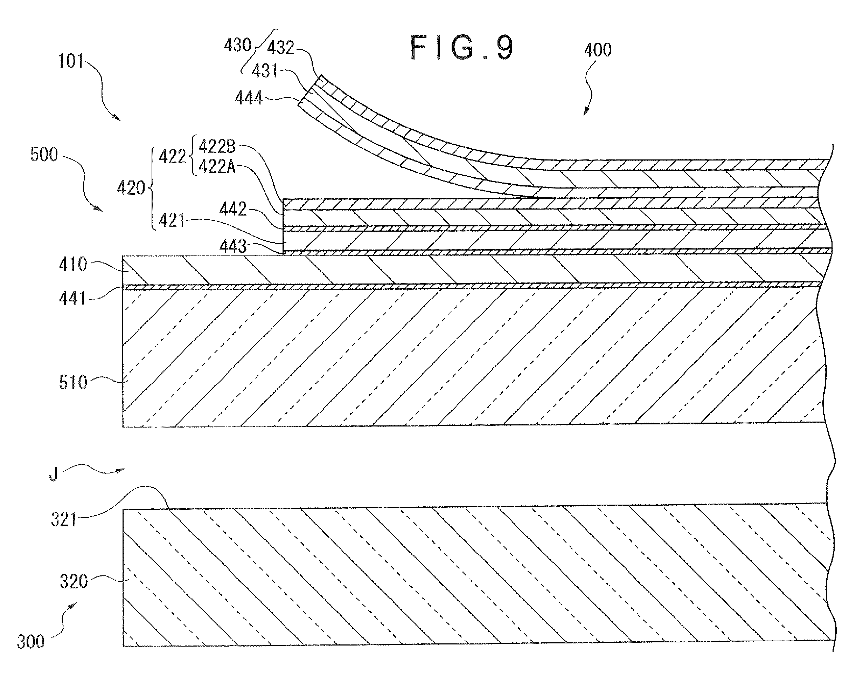

The modifications include an arrangement shown in Fig. 9.

A display device 101 shown in Fig. 9 includes a glass filter 500 provided on the display surface 321 side of the PDP 300 via a space J.

The glass filter 500 includes a glass substrate 510 and an optical function film 400 that is provided via the adhesive layer 441 on a side of the glass filter 500 opposite to the side facing the space J.

Owing to the arrangement, even in the display device 101 having the glass filter 500, the repair can be performed easily and appropriately.

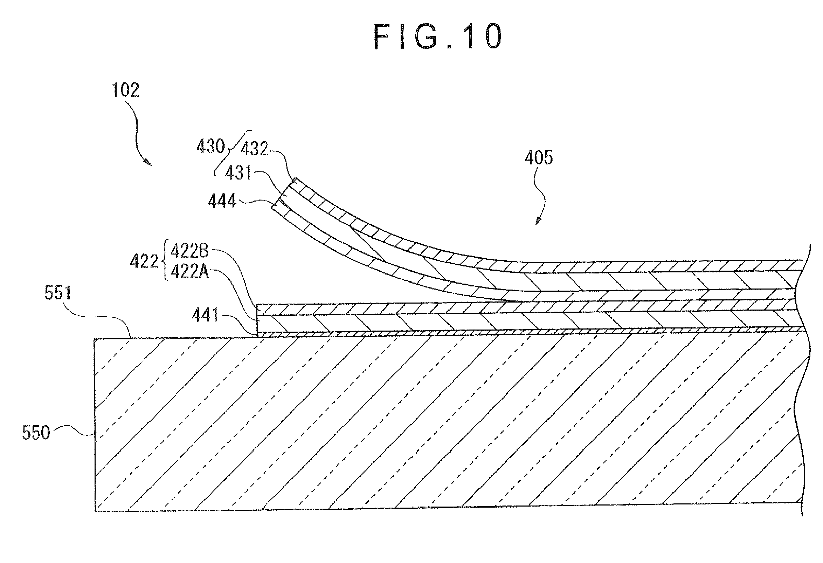

The modifications include an arrangement shown in Fig. 10.

The display device 102 shown in Fig. 10 includes a liquid crystal display panel 550 (the display device main body), an optical function film 405, a casing (not shown), a controller (not shown) and the like.

The optical function film 405 includes the second antireflection film 422 attached on a display surface 551 of the liquid crystal display panel 550 via the adhesive layer 441 and the first antireflection film 430 attached on the second antireflection film 422 via the low adhesive layer 444. In other words, the optical function film 405 does not include the transmittance adjusting film 421 and the electromagnetic-wave shielding film 410 of the optical function film 400 of the above-described embodiment.

Owing to the arrangement, even in the display device 102 having the liquid crystal display panel 550, the repair can be performed easily and appropriately.

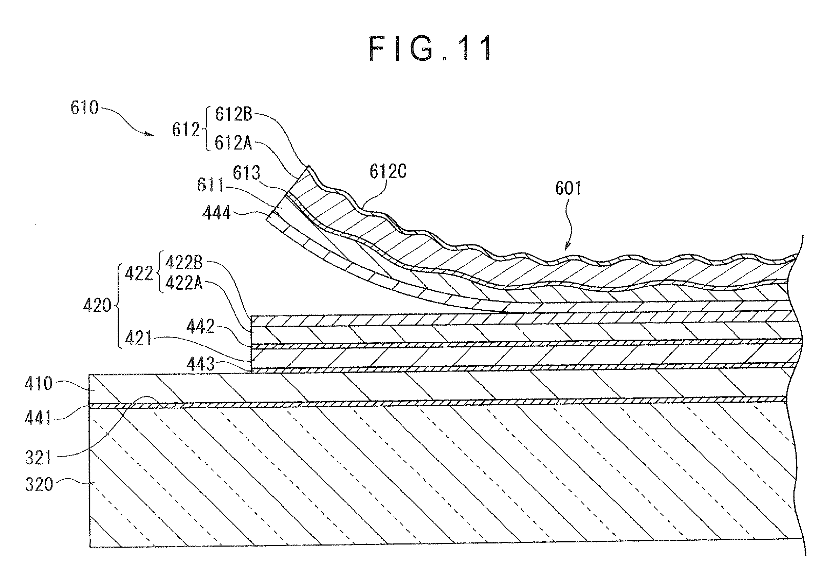

The modifications include an arrangement shown in Fig. 11.

An optical function film 601 shown in Fig. 11 includes an antiglare film 610, the optical-property adjusting film 420 attached on the electromagnetic-wave shielding film 410 via the adhesive layer 443 and the first antireflection film 430 detachably attached on the optical-property adjusting film 420 via the low adhesive layer 444.

The antiglare film 610 has an anti-glare function for preventing glare. The antiglare film 610 includes a first transparent film 611 and a first antireflection film 612 as the reflection-property adjusting film.

The first antireflection film 612 includes a second transparent film 612A and an antireflection layer 612B provided as a thin layer on a surface of the second transparent film 612A. The first antireflection film 612 is attached on the first transparent film 611 via an adhesive layer 613 having a substantially equal adhesion to, for example, the adhesive layer 441.

On a surface of the antiglare film 610 on the antireflection layer 612B side, asperities 612C in a concave and convex manner by, for example, embossing. The asperities 612C provides an anti-glare function on the antiglare film 610.

Such an arrangement provides the anti-glare function such that repair work can be easily and appropriately performed.

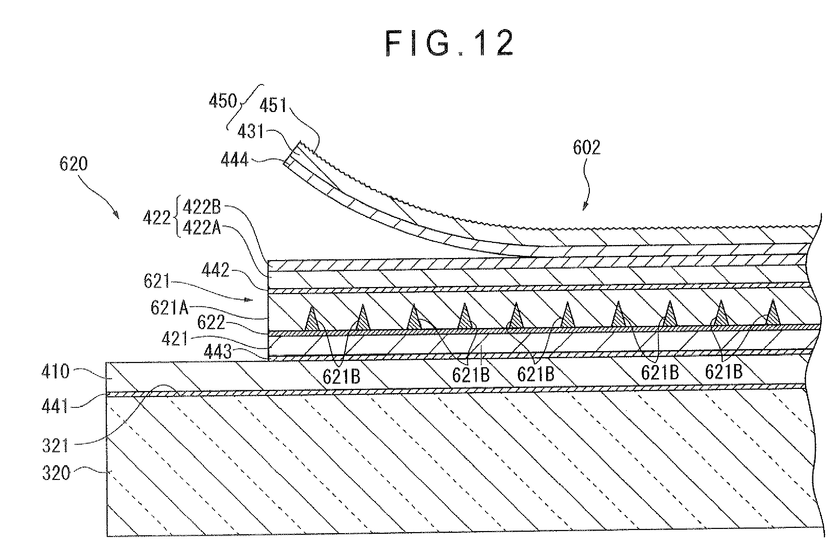

Another arrangement shown in Fig. 12 may be alternatively employed.

An optical function film 602 shown in Fig. 12 includes the electromagnetic-wave shielding film 410, the optical-property adjusting film 620 attached on the electromagnetic-wave shielding film 410 via the adhesive layer 443 and the first antireflection film 450 detachably attached on the optical-property adjusting film 620 via static electricity.

The optical-property adjusting film 620 includes the transmittance adjusting film 421, an outside-light shielding layer 621 provided on a surface of the transmittance adjusting film 421 and the second antireflection film 422 provided on a surface of the optical-property adjusting film 620.

The outside-light shielding layer 621 has a shielding function for outside light irradiated on the display surface 321 from the outside. The outside-light shielding layer 621 includes an outside-light shielding thin film member 621A as a transmissive thin film and a plurality of black stripes 621B provided on a surface of the outside-light shielding thin film member 621A. The plurality of black stripes 621B are formed in a longitudinal manner in a wedge shape in a cross section. The plurality of black stripes 621B are provided on the outside-light shielding thin film member 621A in parallel to each other with a predetermined distance. The outside-light shielding layer 621 is attached on the transmittance adjusting film 421 via an adhesive layer 622 having a substantially equal adhesion to, for example, the adhesive layer 441. On the outside-light shielding layer 621, the second antireflection film 422 is attached via the adhesive layer 442.

Such an arrangement provides a function for shielding outside light such that repair work can be easily and appropriately performed.

In the embodiment shown in Fig. 2, the optical-property adjusting film 420 may be so formed that the outer periphery of the optical-property adjusting film 420 superposes on the outer periphery of the display surface 321 or that the outer periphery of the optical-property adjusting film 420 is positioned on the outer side of the outer periphery of the display surface 321. In other words, the optical-property adjusting film 420 may be larger or smaller than the display surface 321.

In the embodiment shown in Fig. 2, the outer periphery of the first antireflection film 430 is superposed on the outer periphery of the optical-property adjusting film 420. However, since this arrangement is one example, the outer periphery of the first antireflection film 430 may be positioned on the outer side of the outer periphery of the optical-property adjusting film 420 at least on one side or the outer periphery of the optical-property adjusting film 420 may be positioned on the outer side of the outer periphery of the first antireflection film 430. Specifically, as shown in Fig. 13, a detachment portion 480 may be provided, which projects from a corner of the first antireflection film 430 toward the outside of the plane thereof. Accordingly, the first antireflection film 430 including the detachment portion 480 has a partially larger contour by the amount of the detachment portion 480 than the optical-property adjusting film 420.

Owing to such an arrangements, the detachment portion 480 can be used as a starting point to detach the first antireflection film 430 and the first antireflection film 430 can be more easily detached from the optical-property adjusting film 420. Accordingly, the repair can be easily performed.

The arrangements shown in Figs. 5 to 12 may employ other arrangements described above.

The detachment portion 480 may be formed by the first antireflection film 430 or may be provided as a separate member. When provided as a separate member, the detachment portion 480 may be provided so as not to project from the outer periphery of the first antireflection film 430. For example, the detachment portion may be provided on the outer periphery or at an inner portion apart from the outer periphery by a predetermined distance on the upper surface of the first antireflection film 430.

In the embodiment shown in Fig. 2, the optical-property adjusting film 420 may be provided only with the second antireflection film 422. Owing to such an arrangement, the optical function film 400 can be manufactured more easily.

The arrangements shown in Fig 2 and Figs. 5 to 12 may be employed in combination.

In place for the pressure bonding roller, a flat plate may be used to press in the manufacturing method of the optical function film 400.

The order of laminating is not limited to the order shown in Fig. 3 but may be any order.

The display device may be a portable game console, a portable phone, a PDA (Personal Digital Assistant), a personal computer and the like.

In addition to the concrete examples stated above, the present invention can be implemented in any other arrangements or procedures without departing from the scope of the invention.

### [Effects and Advantages of Embodiment]

As described above, in this embodiment, the first antireflection film 430 is detachably attached on one surface of the optical-property adjusting film 420 of the optical function film 400.

Accordingly, when repairing damage on the surface of the optical function film 400 (that is the surface of the first antireflection film 430), such repair can be performed only by detaching the first antireflection film 430 attached in a detachable manner.

In addition, since the optical function film 400 is provided with the first antireflection film 430 and the second antireflection film 422 in advance, it is possible to reliably prevent deterioration in display performance, displacement in position in attaching a later-added reflection film, deterioration in transmittance or change in color tones which may be caused by an air bubble or dust contained in attaching the later-added reflection film.

Hence, the repair can be performed easily and appropriately.

Further, the optical function film 400 is used in the display device 100 having the PDP 300.

Hence, the display device 100 can be easily repaired, thereby contributing to expansion in sales thereof.

The priority application Numbers JP2006-052738 and JP2007-035050 upon which this patent application is based are hereby incorporated by reference.

## Claims

1. An optical function film provided on a main body of a display device which has a display surface, comprising:
an optical-property adjusting film which is provided on a display surface side of the display device, the optical-property adjusting film at least having an antireflection function for preventing reflection of incident light; and
a reflection-property adjusting film detachably attached on a surface of the optical-property adjusting film, the reflection-property adjusting film having an antireflection function.

2. The optical function film according to claim 1, wherein
one of the optical-property adjusting film and the reflection-property adjusting film includes a transmissive film and an antireflection film provided as a thin layer on a surface of the transmissive film, the antireflection film interfering with the incident light and preventing the reflection of the incident light, and
the other one of the optical-property adjusting film and the reflection-property adjusting film includes a transmissive film and micro-asperities provided in a concave and convex manner on a surface of the transmissive film, the micro-asperities scattering the incident light and preventing the reflection of the incident light.

3. The optical function film according to claim 1, wherein
the optical-property adjusting film and the reflection-property adjusting film include the transmissive films having the antireflection function, and
the transmissive film of the reflection-property adjusting film has a larger thickness than that of the transmissive film of the optical-property adjusting film.

4. The optical function film according to any one of claims 1 to 3, wherein
the reflection-property adjusting film is detachably attached on the optical-property adjusting film via an adhesive layer.

5. The optical function film according to any one of claims 1 to 3, wherein
the reflection-property adjusting film is detachably attached on the optical-property adjusting film via static electricity.

6. The optical function film according to any one of claims 1 to 5, wherein
the reflection-property adjusting film is detachably attached on the optical-property adjusting film such that a percentage of a value is equal to or less than 70%, the percentage of the value obtained by dividing a force required for detaching the reflection-property adjusting film from the optical-property adjusting film in a direction substantially orthogonal to a plane direction of the optical-property adjusting film by a force required for detaching the optical-property adjusting film from the display device in a direction substantially orthogonal to a plane direction of the optical-property adjusting film.

7. The optical function film according to claim 6, wherein
the reflection-property adjusting film is detachably attached on the optical-property adjusting film such that the percentage is equal to or less than 50%.

8. The optical function film according to any one of claims 1 to 7, further comprising:
a detachment portion provided near an outer periphery of the reflection-property adjusting film.

9. The optical function film according to any one of claims 1 to 8, further comprising:
an electromagnetic-wave shielding film attached on the other surface of the optical-property adjusting film, the electromagnetic-wave shielding film having a function for shielding an incident electromagnetic wave.

10. An optical function film provided on a main body of a display device which has a display surface, comprising:
a first reflection-property adjusting film provided on a display surface side of the display device, the first reflection-property adjusting film having an antireflection function for preventing reflection of incident light; and
a second reflection-property adjusting film detachably attached on a surface of the first reflection-property adjusting film, the second reflection-property adjusting film having an antireflection function.

11. The optical function film according to claim 10, wherein
one of the first reflection-property adjusting film and the second reflection-property adjusting film includes a transmissive film and an antireflection film provided as a thin layer on a surface of the transmissive film, the antireflection film interfering with the incident light and preventing the reflection of the incident light, and
the other one of the first reflection-property adjusting film and the second reflection-property adjusting film includes a transmissive film and micro-asperities provided in a concave and convex manner on a surface of the transmissive film, the micro-asperities scattering the incident light and preventing the reflection of the incident light.

12. The optical function film according to claim 10 or 11, wherein
the second reflection-property adjusting film is detachably attached on the first reflection-property adjusting film such that a percentage of a value is equal to or less than 70%, the percentage of the value obtained by dividing a force required for detaching the second reflection-property adjusting film from the first reflection-property adjusting film in a direction substantially orthogonal to a plane direction of the first reflection-property adjusting film by a force required for detaching the first reflection-property adjusting film from the display device in a direction substantially orthogonal to a plane direction of the first reflection-property adjusting film.

13. The optical function film according to claim 12, wherein
the second reflection-property adjusting film is detachably attached on the first reflection-property adjusting film such that the percentage is equal to or less than 50%.

14. The optical function film according to any one of claims 10 to 13, further comprising:
a detachment portion provided near an outer periphery of the second reflection-property adjusting film.

15. A display device, comprising:
a main body having a display surface; and
the optical function film provided on a display surface side of the main body according to any one of claims 1 to 14.

16. A display device, comprising:
a main body having a display surface; and
the optical function film provided on a display surface side of the main body according to claim 9, wherein
the main body is a plasma display panel.

17. The display device according to claim 15 or 16, further comprising:
a frame portion which is formed in a frame shape, the frame portion provided so as to substantially face a periphery of the display surface of the main body; and
a frame member having a projection portion projecting from an inner periphery of the frame portion toward an inner side of an outer periphery of the display surface, wherein
the reflection-property adjusting film is attached such that an outer periphery thereof is positioned on an outer side of the display surface than a projecting tip end of the projecting portion of the frame member.

18. The display device according to claim 15 or 16, further comprising:
a frame portion which is formed in a frame shape, the frame portion provided so as to substantially face a periphery of the display surface of the main body; and
a frame member having a projection portion projecting from an inner periphery of the frame portion toward an inner side of an outer periphery of the display surface, wherein
the reflection-property adjusting film is attached such that an outer periphery thereof is positioned on an in-plane side of the display surface than a projecting tip end of the projecting portion of the frame member.

19. A manufacturing method of the optical function film according to any one of claims 1 to 8, comprising:
placing at least one of the optical-property adjusting film and the reflection-property adjusting film on a working surface; and
attaching the optical-property adjusting film and the reflection-property adjusting film in a detachable manner.

20. A manufacturing method of the optical function film according to any one of claims 10 to 14, comprising:
placing at least one of the first reflection-property adjusting film and the second reflection-property adjusting film on a working surface; and
attaching the first reflection-property adjusting film and the second reflection-property adjusting film in a detachable manner.
